# EUROPEAN PATENT APPLICATION

(11) **EP 4 686 206 A1**
(43) Date of publication of application: **28.01.2026**
(21) Application number: 24773846.1
(22) Date of filing: 21.02.2024
(51) Int. Cl.: H04N 21/242

(54) **DATA SYNCHRONIZATION METHOD AND APPARATUS, AND DEVICE AND STORAGE MEDIUM**

(30) Priority: 20.03.2023 CN 202310299725
(71) Applicant: Shining 3D Tech Co., Ltd., Hangzhou, Zhejiang 311258 (CN)
(72) Inventor: FANG, Binbin, Hangzhou, Zhejiang 311258 (CN); LUO, Yifeng, Hangzhou, Zhejiang 311258 (CN); ZHAO, Xiaobo, Hangzhou, Zhejiang 311258 (CN); ZENG, Zexuan, Hangzhou, Zhejiang 311258 (CN); YU, Huizhi, Hangzhou, Zhejiang 311258 (CN)
(74) Representative: Metida
(86) International application number: PCT/CN2024/077918
(87) International publication number: WO 2024/193278

(57) **Abstract**

The present disclosure relates to a data synchronization method and apparatus, and a device and a storage medium. The data synchronization method comprises: acquiring a plurality of image frame sequences and a plurality of pieces of pose information, wherein image frames are obtained by means of image collection modules performing image collection after receiving acquisition trigger pulses, the image collection modules have performed local clock zeroing in advance before receiving the acquisition trigger pulses and after receiving zeroing trigger pulses, the acquisition trigger pulses, which are received by the plurality of image collection modules, are obtained by means of a frequency division module performing frequency division according to the same initial acquisition trigger pulse, and the received zeroing trigger pulses are obtained by means of the frequency division module performing frequency division according to the same initial zeroing trigger pulse; and according to timestamps of attribute information and pose information of the image frames, packaging the image frame and the pose information which correspond to the same collection moment into the same data frame. In the embodiments of the present disclosure, the synchronism of a plurality of image collection modules collecting image frames can be improved, that is, the synchronism of the plurality of image frame sequences is improved.

## Description

The present disclosure claims the priority to Chinese patent application with application No. 202310299725.4, filed on March 20, 2023, entitled "DATA SYNCHRONIZATION METHOD AND APPARATUS, AND DEVICE AND STORAGE MEDIUM" the content of which is hereby incorporated herein fully by reference into the present disclosure for all purposes.

### TECHNICAL FIELD

The present disclosure relates to the field of panoramic vision technology, specifically to a data synchronization method, an apparatus, a device, and a storage medium.

### BACKGROUND ART

Panoramic vision involves displaying a scene ranging from 90 to 360 degrees on a two-dimensional plane. This may be achieved through an image stitching method or by using a catadioptric optical element. The image stitching method typically employs a single or multiple cameras to scan the scene at wide angles, capturing continuous multi-frame images from different directions, which are then stitched together to create a panoramic image.

When multiple cameras are used to scan the scene, it is necessary for these cameras to capture images synchronously. Currently, soft synchronization triggering is commonly used to achieve synchronous image capture by multiple cameras. This method controls the simultaneous capture of images by multiple cameras through trigger commands. However, this soft synchronization triggering method may lead to difficulties in synchronization due to the serial nature of the program and delays between different trigger signal lines. As a result, the multiple images captured by the cameras may have poor synchronization, which may cause issues such as stitching failures when these images are subsequently used for image stitching.

### SUMMARY

### (I) Technical issues to be resolved:

The technical problem to be solved by the present disclosure is to address the issue in existing soft synchronization triggering methods where the serial nature of programs and delays between different triggering signal lines make synchronization difficult, resulting in poor synchronization of multiple image data streams captured by multiple cameras. This poor synchronization may lead to stitching failures when performing image stitching based on the poorly synchronized image data.

### (II) Technical solution:

In order to solve the above technical problems, the embodiments of the present disclosure provide a data synchronization method, an apparatus, an electronic device and a storage medium.

In a first aspect, a data synchronization method is provided, the method including:
acquiring a plurality of image frame sequences captured by a plurality of image acquisition modules and a plurality of pose information captured by a pose detection module; wherein each image frame sequence comprises a plurality of image frames captured at different acquisition time, the image frames are captured by the image acquisition module after receiving an acquisition trigger pulse, the image acquisition module has previously performed zero calibration of a local clock upon receiving a zero calibration trigger pulse before receiving the acquisition trigger pulse, the acquisition trigger pulses received by the plurality of image acquisition modules are obtained by a frequency division module through a frequency division according to a same initial acquisition trigger pulse, and the received zero calibration trigger pulses are obtained by the frequency division module through the frequency division according to a same initial zero calibration trigger pulse;
encapsulating the image frame and the pose information corresponding to the same acquisition time into the same data frame according to attribute information of the image frame and a timestamp of the pose information, the attribute information comprises a timestamp, a sequence number and a channel number.

In a second aspect, a data synchronization apparatus is provided, the apparatus including:
a first acquisition module is used to acquire a plurality of image frame sequences captured by a plurality of image acquisition modules and a plurality of pose information captured by a pose detection module; wherein each image frame sequence comprises a plurality of image frames captured at different acquisition time, the image frames are captured by the image acquisition module after receiving an acquisition trigger pulse, the image acquisition module has previously performed zero calibration of a local clock upon receiving a zero calibration trigger pulse before receiving the acquisition trigger pulse, the acquisition trigger pulses received by the plurality of image acquisition modules are obtained by a frequency division module through a frequency division according to a same initial acquisition trigger pulse, and the received zero calibration trigger pulses are obtained by the frequency division module through the frequency division according to a same initial zero calibration trigger pulse;
an encapsulation module is used to encapsulate the image frame and the pose information corresponding to the same acquisition time into the same data frame according to attribute information of the image frame and a timestamp of the pose information, wherein the attribute information comprises a timestamp, a sequence number and a channel number.

In a third aspect, an embodiment of the present disclosure further provides an electronic device, including:
a processor;
a storage device for storing instructions executable by the processor;
the processor is used to read the instructions from the storage device and execute the instructions to implement the above method.

In a fourth aspect, an embodiment of the present disclosure further provides a computer-readable storage medium, where the storage medium stores a computer program, and the computer program is used to execute a data synchronization method provided in the embodiment of the first aspect of the present disclosure.

### (III) Beneficial effects:

The above technical solution provided by the embodiment of the present disclosure has the following advantages compared with the prior art:
The data synchronization method, the apparatus, the device and the medium provided by the embodiments of the present disclosure may acquire a plurality of image frame sequences captured by a plurality of image acquisition modules and a plurality of pose information captured by a pose detection module; wherein each image frame sequence comprises a plurality of image frames captured at different acquisition time, the image frames are captured by the image acquisition module after receiving an acquisition trigger pulse, the image acquisition module has previously performed zero calibration of a local clock upon receiving a zero calibration trigger pulse before receiving the acquisition trigger pulse, the acquisition trigger pulses received by the plurality of image acquisition modules are obtained by frequency division according to same initial acquisition trigger pulse, and the received zero calibration trigger pulses are obtained by frequency division according to the same initial zero calibration trigger pulse by the frequency division module; and encapsulate the image frame and the pose information corresponding to the same acquisition time into the same data frame according to attribute information of the image frame and a timestamp of the pose information, wherein the attribute information comprises a timestamp, a sequence number and a channel number. It can be seen that by adopting the above technical solution, multiple image acquisition modules perform zero calibration of the local clock before starting acquisition. Additionally, the multiple image acquisition modules achieve synchronized acquisition through hardware synchronization triggering with higher triggering precision. In this way, the synchronization of image frames captured by the multiple image acquisition modules may be improved, thereby enhancing the synchronization of multiple image frame sequences.

### BRIEF DESCRIPTION OF THE DRAWINGS

Drawings incorporated into the specification and forming part of the specification illustrate embodiments of the present disclosure and are used to explain the principles of the present disclosure.

To clearly illustrate the embodiments of the present disclosure or the technical solutions in prior art, the following briefly introduces the accompanying drawings used in the description of the embodiments or the prior art. Obviously, the drawings in the following description are only some embodiments of the present disclosure. For those skilled in the art, other drawings can be obtained based on these drawings without creative effort.
FIG. 1 is a schematic structural diagram of an electronic device provided by an embodiment of the present disclosure.
FIG. 2 is a schematic flowchart of a data synchronization method provided by an embodiment of the present disclosure.
FIG. 3 is a schematic flowchart of another data synchronization method provided by an embodiment of the present disclosure.
FIG. 4 is a schematic structural diagram of a data synchronization device provided in an embodiment of the present disclosure.

### DETAILED DESCRIPTION

To make the objectives, technical solutions, and advantages of the present disclosure clearer, the technical solutions in the embodiments of the present disclosure will be described clearly and completely in conjunction with the accompanying drawings. Obviously, the described embodiments are only a part of the embodiments of the present disclosure, not all of them. Based on the embodiments of the present disclosure, all other embodiments obtained by those skilled in the art without creative effort shall fall within the protection scope of the present disclosure.

To solve the above problem, the embodiments of the present disclosure provide a data synchronization method, an apparatus, a device and a storage medium.

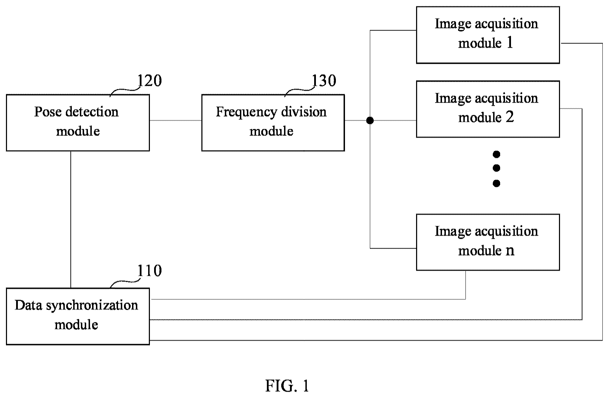

FIG. 1 is a schematic diagram of the structure of an electronic device provided by an embodiment of the present disclosure. As shown in FIG. 1, the electronic device includes a data synchronization module 110, which may include a processor and a memory storing computer program instructions. The processor reads and executes the computer program instructions stored in the memory to perform steps of the data synchronization method provided by the embodiments of the present disclosure.

Specifically, the processor may include a central processing unit (CPU), an application-specific integrated circuit (ASIC), or one or more integrated circuits configured to implement the embodiments of the present application.

The memory may include a mass storage for information or instructions. By way of example and not limitation, the memory may include a hard disk drive (HDD), a floppy disk drive, flash memory, an optical disk, a magneto-optical disk, a magnetic tape, or a universal serial bus (USB) drive, or a combination of two or more of these. Where appropriate, the memory may include removable or non-removable (or fixed) media. Where appropriate, the memory may be internal or external to the integrated gateway device. In specific embodiments, the memory is non-volatile solid-state memory. In specific embodiments, the memory includes read-only memory (ROM). Where appropriate, the ROM may be mask-programmed ROM, programmable ROM (PROM), erasable PROM (EPROM), electrically erasable PROM (EEPROM), electrically alterable ROM (EAROM), or flash memory, or a combination of two or more of these.

Continuing with FIG. 1, optionally, the electronic device may further include: multiple image acquisition modules (e.g., image acquisition module 1 to image acquisition module n as shown in FIG. 1), a pose detection module 120, and a frequency division module 130. The pose detection module 120 is connected to the data synchronization module 110 and the frequency division module 130 respectively. The pose detection module 120 is used to collect pose information and generate an initial zero calibration trigger pulse and an initial acquisition trigger pulse. The frequency division module 130 is connected to multiple image acquisition modules and is used to generate multiple zero calibration trigger pulses based on frequency division of the initial zero calibration trigger pulse and multiple acquisition trigger pulses based on frequency division of the initial acquisition trigger pulse. The image acquisition module is connected to the data synchronization module 110 and is used to perform zero calibration of a local clock upon receiving the zeroing trigger pulse and to collect image frames after receiving the acquisition trigger pulse.

Specifically, the pose detection module 120 may detect the pose information of the image acquisition module. The pose detection module 120 may be an inertial measurement unit (IMU) or any other module capable of posture detection. The pose information represents the posture of the image acquisition module when collecting image frames and may include a three-axis posture angle (or an angular velocity) and an acceleration but is not limited to these.

Specifically, the frequency division module 130 may be any module capable of frequency division and is not limited in this disclosure.

Specifically, the image acquisition module may be any module capable of image acquisition, such as a camera, a scanner, a mobile phone, etc., but is not limited to these.

The data synchronization method provided by the embodiments of the present disclosure will be described below in conjunction with FIG. 1 to FIG. 3. In the embodiments of the present disclosure, the data synchronization method may be performed by the data synchronization module. The data synchronization module may be the data synchronization module in the electronic device shown in FIG. 1 but is not limited to this.

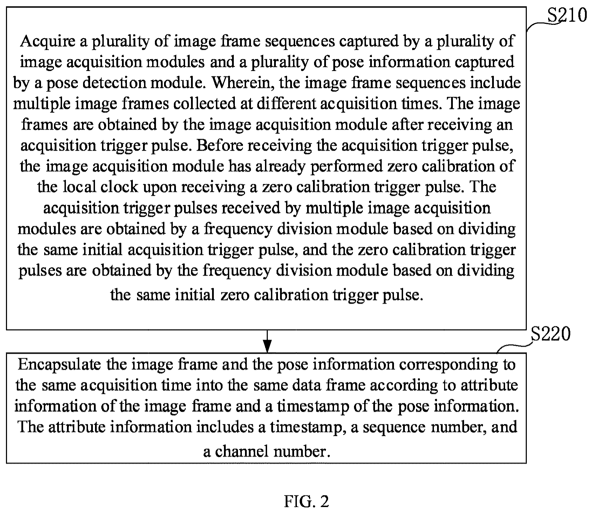

FIG. 2 is a schematic flowchart of a data synchronization method provided by an embodiment of the present disclosure.

As shown in FIG. 2, the data synchronization method may include the following steps:
S210: multiple image frame sequences collected by the multiple image acquisition modules and multiple pose information collected by a pose detection module are acquired. Wherein, the image frame sequences include multiple image frames collected at different acquisition times. The image frames are obtained by the image acquisition module after receiving an acquisition trigger pulse. Before receiving the acquisition trigger pulse, the image acquisition module has already performed zero calibration of the local clock upon receiving a zero calibration trigger pulse. The acquisition trigger pulses received by multiple image acquisition modules are obtained by a frequency division module based on dividing the same initial acquisition trigger pulse, and the zero calibration trigger pulses are obtained by the frequency division module based on dividing the same initial zero calibration trigger pulse.

Specifically, the pose detection module may generate the initial zero calibration trigger pulse and the initial acquisition trigger pulse. And the initial acquisition trigger pulse may trigger the pose detection module to detect the pose information of the image acquisition device.

Specifically, the frequency division module may generate multiple zero calibration trigger pulses based on dividing the initial zero calibration trigger pulse and send the multiple zero calibration trigger pulses to multiple image acquisition modules, respectively, to trigger the image acquisition modules to record a timestamp of the zero calibration trigger pulse and perform zero calibration of the local clock. The timestamp of the zero calibration trigger pulse may be the moment corresponding to an edge (e.g., a rising edge or a falling edge) of the zero calibration trigger pulse. Zero calibration of the local clock involves setting the timestamp of the zero calibration trigger pulse as a preset time (e.g., time zero), but is not limited to this.

The frequency division module may generate multiple acquisition trigger pulses based on dividing the initial acquisition trigger pulse and send the multiple acquisition trigger pulses to multiple image acquisition modules, respectively, to trigger the image acquisition modules to record the timestamp and sequence number of the acquisition trigger pulse (i.e., a timestamp and a sequence number of the image frame corresponding to the acquisition trigger pulse) and start image acquisition to obtain the image frame.

Specifically, for each image acquisition module, the image acquisition module may send the collected image frame and attribute information of the image frame to the data synchronization module in real-time, thereby continuously sending multiple image frames (i.e., image frame sequences) to the data synchronization module over a period of time. Thus, the data synchronization module receives multiple image frame sequences and their attribute information, where the attribute information of the image frame includes a timestamp, a sequence number, and a channel number. The channel number is used to identify the image acquisition module that collected the image frame.

Alternatively, for each image acquisition module, the image acquisition module may send the image frame sequence and the attribute information of each image frame in the sequence to the data synchronization module after continuously collecting multiple image frames (i.e., image frame sequences). Thus, the data synchronization module may receive multiple image frame sequences and their attribute information.

Alternatively, multiple image frame sequences and their attribute information may be stored in the memory of the data synchronization module or other external storage, so the data synchronization module may read multiple image frame sequences and their attribute information from the memory, but it is not limited to this.

Optionally, the method may further include: sending an advance notification of the zero calibration trigger pulse to multiple image acquisition modules, enabling the image acquisition modules to set the first single pulse received after the advance notification as the zero calibration trigger pulse. This ensures that the image acquisition modules know whether the current pulse is a zero calibration trigger pulse or an acquisition trigger pulse, allowing them to perform zero calibration of the local clock or image acquisition in a timely manner.

For example, continuing to FIG.1, the image acquisition module is pre-configured by setting relevant attributes of image acquisition (e.g., a size of image frame, a format, whether to compression, etc.) and a fixed exposure duration. Additionally, the image acquisition module is set to perform image acquisition after receiving an external trigger pulse (i.e., the acquisition trigger pulse). Then, the pose detection module may initiate a single pulse (i.e., the initial zero calibration trigger pulse), and the frequency division module divides the single pulse to generate multiple synchronized trigger pulses (i.e., multiple zero calibration trigger pulses) and distributes the multiple synchronized trigger pulses to multiple image acquisition modules. The image acquisition modules use the single pulse to perform zero calibration of the local clock. Then, the pose detection module may initiate continuous pulses (i.e., continuous initial acquisition trigger pulses), and the frequency division module divides the initial acquisition trigger pulse to generate multiple synchronized trigger pulses (i.e., multiple acquisition trigger pulses) and distributes the multiple synchronized trigger pulses to multiple image acquisition modules, triggering the image acquisition modules to record the timestamp and sequence number of the synchronized trigger pulse and start exposure. After exposure ends, the image frame and attribute information (including a timestamp, a sequence number, and a channel number) of the image frame are output. Thus, the data synchronization module may receive multiple image frame sequences and their attribute information. When initiating continuous pulses, the pose detection module may start continuous collection of pose information and send the pose information to the data synchronization module. The data synchronization module may record the timestamp of the pose information when the pose information is received.

S220: the image frame and pose information corresponding to the same acquisition time are encapsulated into the same data frame based on the attribute information of the image frame and the timestamp of the pose information. The attribute information includes a timestamp, a sequence number, and a channel number.

Specifically, for multiple image frame sequences, image frames with timestamp differences within a first preset error range, the same sequence number, and different channel numbers are encapsulated in the same data frame. Additionally, pose information and image frames with timestamp differences within a second preset error range are encapsulated in the same data frame. This ensures that the image frame and pose information corresponding to the same acquisition time are encapsulated in the same data frame.

It is understandable that due to potential delays and inconsistent clock settings among multiple image acquisition modules, the synchronization of image frames collected by multiple image acquisition modules may be poor, leading to unsatisfactory image fusion results. However, in the embodiments of the present disclosure, the frequency division module may divide the initial zero calibration trigger pulse to generate multiple zero calibration trigger pulses and distribute them to multiple image acquisition modules through hardware lines. Since the transmission delay of hardware lines is very short and may be ignored, multiple image acquisition modules may receive the zero calibration trigger pulse simultaneously. Thus, after performing zero calibration of the local clock, the clock settings of multiple image acquisition modules tend to be consistent. Due to the consistent clock settings of multiple image acquisition modules and the negligible transmission delay of the acquisition trigger pulse through hardware lines, multiple image acquisition modules may receive the acquisition trigger pulse simultaneously and start image acquisition at the same time. This ensures that image acquisition modules obtain image frames at the same time, achieving data synchronization among multiple image acquisition modules.

In the embodiments of the present disclosure, since multiple image acquisition modules perform zero calibration of the local clock before collection and achieve synchronized collection through hardware synchronization triggering with higher precision, the synchronization of image frames collected by multiple image acquisition modules is improved, thereby enhancing the synchronization of multiple image frame sequences.

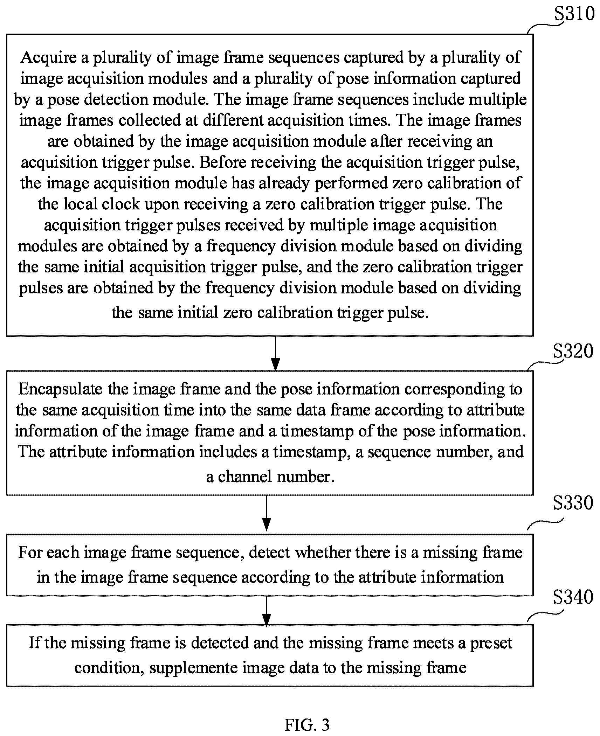

FIG.3 is a schematic flowchart of another data synchronization method provided by an embodiment of the present disclosure. This embodiment optimizes the above embodiment and may be combined with one or more of the above embodiments.

As shown in FIG. 3, the data synchronization method may include the following steps:
S310: multiple image frame sequences collected by the multiple image acquisition modules and multiple pose information collected by a pose detection module are acquired. The image frame sequences include multiple image frames collected at different acquisition times. The image frames are obtained by the image acquisition module after receiving an acquisition trigger pulse. Before receiving the acquisition trigger pulse, the image acquisition module has already performed zero calibration of the local clock upon receiving a zero calibration trigger pulse. The acquisition trigger pulses received by multiple image acquisition modules are obtained by a frequency division module based on dividing the same initial acquisition trigger pulse, and the zero calibration trigger pulses are obtained by the frequency division module based on dividing the same initial zero calibration trigger pulse.

Specifically, S310 is similar to S210, and details are not repeated here.

S320: The image frame and pose information corresponding to the same acquisition time are encapsulated into the same data frame based on the attribute information of the image frame and the timestamp of the pose information. The attribute information includes a timestamp, a sequence number, and a channel number.

Specifically, S320 is similar to S220, and details are not repeated here.

S330: For each image frame sequence, detect whether there is a missing frame in the image frame sequence according to the attribute information.

Specifically, for each sequence number (or timestamp), check whether the image frame corresponding to the sequence number (or timestamp) has image data (i.e., whether it is empty). If there is no image data, the image frame is a missing frame.

S340: If a missing frame is detected and the missing frame meets a preset condition, image data for the missing frames is supplemented.

Specifically, the preset condition may be empty, meaning that any missing frame's image data is supplemented. Alternatively, the preset condition may include: the image frames adjacent to the missing frame in the image frame sequence are not missing frames, and/or the missing frame is one of multiple consecutive missing frames, and the number of consecutive missing frames is less than a preset threshold. However, this is not limited to these conditions.

In some embodiments, S340 may include: inputting the image frame sequence to which the missing frame belongs into an image data supplementation model and obtaining the image frame sequence with the missing frame's image data supplemented. The image data supplementation model is pre-trained using image frame sequences containing missing frames and image frames with image data corresponding to the missing frames.

In other embodiments, S340 may include: S341: If a missing frame is detected and the missing frame meets the preset condition, determine a reference image frame corresponding to the missing frame.

In one example, S341 may include: if the image frame adjacent to the missing frame in the image frame sequence is not the missing frame, determining that the missing frame meets the preset condition; set a first preset number of image frames before the missing frame in the image frame sequence as the reference image frame of the missing frame; and/or set a second preset number of image frames after the missing frame in the image frame sequence as the reference image frame of the missing frame.

Specifically, the adjacency of two image frames means that the corresponding acquisition trigger pulses of the two image frames are adjacent.

Specifically, a specific value of the first preset number may be set by those skilled in the art based on actual conditions and is not limited here.

Specifically, "the first preset number of image frames adjacent before the missing frame" refers to the first preset number of consecutive image frames starting from the image frame adjacent to the missing frame and with an acquisition time earlier than the missing frame. Similarly, "the first preset number of image frames adjacent after the missing frame" refers to the first preset number of consecutive image frames starting from the image frame adjacent to the missing frame and with an acquisition time later than the missing frame.

For example, if the number of image acquisition modules is *n*, the image frame sequence including image frame 1, image frame 2, image frame 3, ..., and image frame n, and the first preset number is 2, then when image frame 3 is a missing frame, for this missing frame, image frame 1 and image frame 2 may be used as reference image frames for the missing frame, or image frame 3 and image frame 4 may be used as reference image frames for the missing frame, or image frame 1, image frame 2, image frame 3, and image frame 4 may be used as reference image frames for the missing frame.

In another example, S342 may include: if the missing frame is one of multiple consecutive missing frames and the number of consecutive missing frames is less than a preset frame threshold, determining that the missing frame meets the preset condition; if the image frame adjacent before or after the missing frame in the image frame sequence is not a missing frame, using a third preset number of image frames adjacent to the missing frame as reference image frames for the missing frame.

Specifically, "the third preset number of image frames adjacent to the missing frame" may refer to the third preset number of image frames adjacent before the missing frame; or the third preset number of image frames adjacent after the missing frame; or it may include a partial number of image frames adjacent before the missing frame and a partial number of image frames adjacent after the missing frame, with a total number of frames reaching the third preset number.

Specifically, "the image frame adjacent before or after the missing frame is not a missing frame" includes both cases where it is not a missing frame initially and cases where it is no longer a missing frame after image data supplementation.

Specifically, the specific value of the preset frame threshold and the second preset number may be set by those skilled in the art according to actual conditions, and are not limited here.

For example, if the number of the image acquisition modules is n, and the image frame sequence includes image frame 1, image frame 2, image frame 3, ..., image frame n, the preset frame threshold is 5, and the second preset number is 2, then when the image frame 3, the image frame 4, the image frame 5, and the image frame 6 are all missing frames. For the case where image frame 3 is the missing frame, the image frame 1 and the image frame 2 may be used as reference image frames for the missing frame. After supplementing image data for the image frame 3, for the case where the image frame 4 is the missing frame, the image frame 2 and the supplemented image frame 3 may be used as reference image frames for the missing frame. After supplementing image data for the image frame 4, for the case where the image frame 5 is the missing frame, the image frame 3 and the supplemented image frame 4 may be used as reference image frames for the missing frame. Of course, the image frame 6 and the image frame 5 may also be used as reference image frames for the missing frame.

S342: the image data of the missing frame is determined based on the pose information corresponding to the missing frame, the reference image frame, and the pose information corresponding to the reference image frame.

Specifically, the pose information of the missing frame may be determined based on the pose information of the reference image frame. For example, the pose information of the image frame adjacent before the missing frame (i.e., the reference image frame) may be summed with the pose information difference between adjacent image frames to obtain the pose information of the missing frame. The pose information of the image frame adjacent after the missing frame (i.e., the reference image frame) may be subtracted by the pose information difference between adjacent image frames to obtain the pose information of the missing frame. Or the pose information of the image frame adjacent before the missing frame and the image frame adjacent after the missing frame may be averaged to obtain the pose information of the missing frame.

Of course, the pose information of the missing frame may also be determined based on the timestamp of the missing frame. For example, from the timestamps of multiple pose information, determine the target timestamp that falls within the second preset error range of the missing frame's timestamp, and set the pose information corresponding to the target timestamp as the pose information of the missing frame.

It is understandable that when some image frames of an image frame sequence are missing (i.e., there are missing frames in the image frame sequence), it may also cause multiple image acquisition modules to fail to synchronize. In related technologies, when there are missing frames of the image frame sequence, the common approach is to sacrifice the unsynchronized image frames to ensure a synchronized image frame sequence, i.e., only extracting synchronized image frames from multiple image frame sequences while discarding unsynchronized image frames. However, this approach greatly wastes the utilization of image data. In contrast, in the embodiments of the present disclosure, image data supplementation may be performed for missing frames to recover them, thereby improving the utilization of image data. Moreover, since the gesture of the image acquisition module changes continuously during the scanning of a scene, the correlation between adjacent image frames captured by the image acquisition module is high. Therefore, using one or multiple consecutive image frames adjacent to the missing frame as reference image frames for the missing frame allows for the recovery of the missing frame based on highly correlated image frames, which is beneficial for improving the recovery accuracy of the missing frame.

Optionally, the method further includes: if the missing frame is one of multiple consecutive missing frames and the number of consecutive missing frames is greater than or equal to a preset frame number threshold, discarding the data frame to which the missing frame belongs.

It is understandable that if the number of consecutive missing frames is greater than or equal to the preset frame number threshold, it indicates that many consecutive image frames are missing in the image frame sequence. In this case, it is difficult to accurately recover each missing frame, so the consecutive missing frames may be discarded to save time on recovering missing frames. However, since the probability of losing many consecutive image frames is much lower than losing a single frame, the case where the number of consecutive missing frames is greater than or equal to the preset frame number threshold is very rare, meaning that in most cases, missing frames may be recovered, resulting in high synchronization availability.

The embodiments of the present disclosure may achieve synchronized acquisition by triggering multiple image acquisition modules with higher-precision hardware synchronization and may recover missing frames when they meet the preset condition. The embodiments of the present disclosure combine hardware synchronization triggering with software missing frame recovery, improving the synchronization of multiple image frame sequences captured by multiple image acquisition modules in both hardware and software aspects, achieving high-quality and high-availability data synchronization.

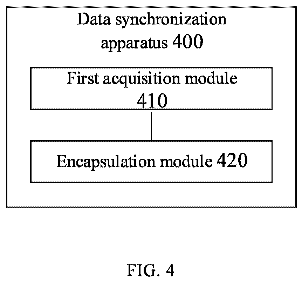

FIG. 4 is a schematic diagram of the structure of a data synchronization apparatus provided in an embodiment of the present disclosure.

As shown in FIG. 4, the data synchronization apparatus 400 may include:
A first acquisition module 410 is used to acquire a plurality of image frame sequences captured by a plurality of image acquisition modules and a plurality of pose information captured by a pose detection module; wherein each image frame sequence comprises a plurality of image frames captured at different acquisition time, the image frames are captured by the image acquisition module after receiving an acquisition trigger pulse, the image acquisition module has previously performed zero calibration of a local clock upon receiving a zero calibration trigger pulse before receiving the acquisition trigger pulse, the acquisition trigger pulses received by the plurality of image acquisition modules are obtained by a frequency division module through a frequency division according to a same initial acquisition trigger pulse, and the received zero calibration trigger pulses are obtained by the frequency division module through the frequency division according to a same initial zero calibration trigger pulse.

An encapsulation module 420 is used to encapsulate the image frame and the pose information corresponding to the same acquisition time into the same data frame according to attribute information of the image frame and a timestamp of the pose information, the attribute information comprises a timestamp, a sequence number and a channel number.

In another embodiment of the present disclosure, the apparatus may further include:
a sending module is used to send an advance notification for the zero calibration trigger pulse to the plurality of image acquisition modules, so that the plurality of image acquisition modules to set the first single pulse received after the advance notification as the zero calibration trigger pulse.

In another embodiment of the present disclosure, the apparatus may further include:
a detection module is used to encapsulate the image frame and the pose information corresponding to the same acquisition time into the same data frame according to the timestamp of the image frame and the timestamp of the pose information, and then detect whether there is a missing frame in the image frame sequence according to the attribute information for each of the image frame sequences;
a supplementation module is used to supplement image data to the missing frame if the missing frame is detected and the missing frame meets a preset condition.

In another embodiment of the present disclosure, the supplementing module may include:
a first determination submodule is used to determine a reference image frame corresponding to the missing frame if the missing frame is detected and the missing frame meets the preset condition;
a second determination submodule is used to determine the image data of the missing frame according to the pose information corresponding to the missing frame, the reference image frame and the pose information corresponding to the reference image frame.

In another embodiment of the present disclosure, the first determination submodule may include:
a first determination unit, configured to determine that the missing frame meets the preset condition if an image frame adjacent to the missing frame within the image frame sequence to which the missing frame belongs is not a missing frame;
a second determination unit is used to designating a first preset number of image frames that are preceding adjacent to the missing frame, within the image frame sequence to which the missing frame belongs, as reference image frames for the missing frame;
and\or; designating a second preset number of image frames that are following adjacent to the missing frame, within the image frame sequence to which the missing frame belongs, as reference image frames for the missing frame.

In another embodiment of the present disclosure, the first determination submodule may include:
a third determination unit, configured to determine that the missing frame meets the preset condition if the missing frame is one of a plurality of consecutive missing frames and the number of the plurality of consecutive missing frames is less than a preset frame number threshold;
a fourth determination unit is configured to set a third preset number of image frames adjacent to the missing frame as the reference image frames for the missing frame if an image frame adjacent to or after the missing frame within the image frame sequence to which the missing frame belongs is not the missing frame.

In another embodiment of the present disclosure, the apparatus may further include:
a discarding module is used to discard the data frame to which the missing frame belongs if the missing frame is one of a plurality of consecutive missing frames and the number of the plurality of consecutive missing frames is greater than or equal to a preset frame number threshold.

It should be noted that the data synchronization apparatus 400 shown in FIG. 4 may execute each step in the method embodiments shown in FIG. 2 to FIG. 3. and realize each process and effect in the method embodiments shown in FIG. 2 to FIG. 3, which will not be described in detail here.

An embodiment of a computer-readable storage medium is provided in an embodiment of the present disclosure. The computer-readable storage medium and the data synchronization method of the above-mentioned embodiments belong to the same inventive concept. For details not described in detail in the embodiment of the computer-readable storage medium, reference can be made to the embodiment of the above-mentioned data synchronization method.

This embodiment provides a storage medium containing computer executable instructions. When the computer executable instructions are executed by a computer processor, they are used to perform a data synchronization method. The method includes: acquiring multiple image frame sequences acquired by multiple image acquisition modules and multiple pose information acquired by the pose detection module; wherein the image frame sequence includes multiple image frames acquired at different acquisition time, the image frames are acquired by the image acquisition module after receiving an acquisition trigger pulse, the image acquisition module has previously performed local clock zeroing after receiving a zeroing trigger pulse before receiving the acquisition trigger pulse, the acquisition trigger pulses received by the multiple image acquisition modules are obtained by frequency division according to the same initial acquisition trigger pulse, and the received zeroing trigger pulses are obtained by frequency division according to the same initial zero calibration trigger pulse by the frequency division module;
encapsulating the image frame and the pose information corresponding to the same acquisition time into the same data frame, wherein the attribute information includes the timestamp, the sequence number and the channel number according to the attribute information of the image frame and the timestamp of the pose information.

Of course, the storage medium containing computer executable instructions provided by the embodiment of the present disclosure, whose computer executable instructions are not limited to the above method operations, can also execute related operations in the data synchronization method provided by any embodiment of the present disclosure.

Through the above description of the implementation methods, the technical personnel in the relevant field can clearly understand that the present disclosure can be implemented by means of software and necessary general hardware, and of course it can also be implemented by hardware, but in many cases the former is a better implementation method. Based on such an understanding, the technical solution of the present disclosure can be essentially or the part that contributes to the prior art can be embodied in the form of a software product, and the computer software product can be stored in a computer-readable storage medium, such as a computer floppy disk, read-only memory (ROM), random access memory (RAM), flash memory (FLASH), hard disk or optical disk, etc., including a number of instructions for a computer cloud platform (which may be a personal computer, a server, or a network cloud platform, etc.) to execute the data synchronization method provided by each embodiment of the present disclosure.

It should be noted that, in this article, relational terms such as "first" and "second" are only used to distinguish one entity or operation from another entity or operation, and do not necessarily require or imply any such actual relationship or order between these entities or operations. Moreover, the terms "include", "comprise" or any other variants thereof are intended to cover non-exclusive inclusion, so that a process, method, article or device including a series of elements includes not only those elements, but also other elements not explicitly listed, or also includes elements inherent to such process, method, article or device. In the absence of further restrictions, the elements defined by the sentence "comprise a ..." do not exclude the existence of other identical elements in the process, method, article or device including the elements.

The above description is only a specific embodiment of the present disclosure, so that those skilled in the art can understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to the embodiments shown herein, but will conform to the widest scope consistent with the principles and novel features disclosed herein.

### Industrial Applicability

The data synchronization method provided by the present invention can enable multiple image acquisition modules to perform local clock zeroing before acquisition, and multiple image acquisition modules can achieve synchronous acquisition through hardware synchronization triggering with higher triggering accuracy. In this way, the synchronization of image frame acquisition by multiple image acquisition modules can be improved, that is, the synchronization of multiple image frame sequences can be improved, and it has strong industrial practicality.

## Claims

1. A data synchronization method, **characterized in that**, the method comprising:
acquiring a plurality of image frame sequences captured by a plurality of image acquisition modules and a plurality of pose information captured by a pose detection module; wherein each image frame sequence comprises a plurality of image frames captured at different acquisition time, the image frames are captured by the image acquisition module after receiving an acquisition trigger pulse, the image acquisition module has previously performed zero calibration of a local clock upon receiving a zero calibration trigger pulse before receiving the acquisition trigger pulse, the acquisition trigger pulses received by the plurality of image acquisition modules are obtained by a frequency division module through a frequency division according to a same initial acquisition trigger pulse, and the received zero calibration trigger pulses are obtained by the frequency division module through the frequency division according to a same initial zero calibration trigger pulse;
encapsulating the image frame and the pose information corresponding to the same acquisition time into the same data frame according to attribute information of the image frame and a timestamp of the pose information, the attribute information comprises a timestamp, a sequence number and a channel number.

2. The method according to claim 1, **characterized in that**, the method further comprising:
sending an advance notification for the zero calibration trigger pulse to the plurality of image acquisition modules, so that the plurality of image acquisition modules set the first single pulse received after the advance notification as the zero calibration trigger pulse.

3. The method according to claim 1, **characterized in that**, wherein after encapsulating the image frame and the pose information corresponding to the same acquisition time into the same data frame according to the timestamp of the image frame and the timestamp of the pose information, the method further comprises:
detecting whether there is a missing frame in the image frame sequence according to the attribute information for each of the image frame sequences;
if the missing frame is detected and the missing frame meets a preset condition, supplementing image data to the missing frame.

4. The method according to claim 3, **characterized in that**, wherein if the missing frame is detected and the missing frame meets the preset condition, supplementing image data to the missing frame comprises:
if the missing frame is detected and the missing frame meets the preset condition, determining a reference image frame corresponding to the missing frame;
determining the image data of the missing frame according to the pose information corresponding to the missing frame, the reference image frame and the pose information corresponding to the reference image frame.

5. The method according to claim 3, **characterized in that**, wherein if the missing frame is detected and the missing frame meets the preset condition, determining the reference image frame corresponding to the missing frame comprises:
if an image frame adjacent to the missing frame within the image frame sequence to which the missing frame belongs is not a missing frame, determining that the missing frame meets the preset condition;
designating a first preset number of image frames that are preceding adjacent to the missing frame, within the image frame sequence to which the missing frame belongs, as reference image frames for the missing frame; and/or
designating a second preset number of image frames that are following adjacent to the missing frame, within the image frame sequence to which the missing frame belongs, as reference image frames for the missing frame.

6. The method according to claim 3, **characterized in that**, wherein if the missing frame is detected and the missing frame meets the preset condition, determining the reference image frame corresponding to the missing frame comprises:
if the missing frame is one of a plurality of consecutive missing frames and the number of the plurality of consecutive missing frames is less than a preset frame number threshold, determining that the missing frame meets the preset condition;
if an image frame that is preceding or following adjacent to the missing frame, within the image frame sequence to which the missing frame belongs, is not the missing frame, designating a third preset number of image frames adjacent to the missing frame as the reference image frames for the missing frame.

7. The method according to claim 6, **characterized in that**, the method further comprising:
if the missing frame is one of a plurality of consecutive missing frames and the number of the plurality of consecutive missing frames is greater than or equal to a preset frame number threshold, discarding the data frame to which the missing frame belongs.

8. A data synchronization apparatus, **characterized in that**, comprising:
a first acquisition module is used to acquire a plurality of image frame sequences captured by a plurality of image acquisition modules and a plurality of pose information captured by a pose detection module; wherein each image frame sequence comprises a plurality of image frames captured at different acquisition time, the image frames are captured by the image acquisition module after receiving an acquisition trigger pulse, the image acquisition module has previously performed zero calibration of a local clock upon receiving a zero calibration trigger pulse before receiving the acquisition trigger pulse, the acquisition trigger pulses received by the plurality of image acquisition modules are obtained by a frequency division module through a frequency division according to a same initial acquisition trigger pulse, and the received zero calibration trigger pulses are obtained by the frequency division module through the frequency division according to a same initial zero calibration trigger pulse;
an encapsulation module is used to encapsulate the image frame and the pose information corresponding to the same acquisition time into the same data frame according to attribute information of the image frame and a timestamp of the pose information, wherein the attribute information comprises a timestamp, a sequence number and a channel number.

9. An electronic device, **characterized in that**, wherein comprises a data synchronization module, wherein the data synchronization module comprises:
a processor;
a memory for storing executable instructions;
the processor is used to read the executable instructions from the memory and execute the executable instructions to implement the data synchronization method described in any one of claims 1 to 7.

10. The electronic device according to claim 9, **characterized in that**, the electronic device further comprising: a plurality of image acquisition modules, a pose detection module, and a frequency division module;
the pose detection module is connected to the data synchronization module and the frequency division module respectively, and the pose detection module is used to collect pose information and generate an initial zero calibration trigger pulse and an initial acquisition trigger pulse;
the frequency division module is connected to the plurality of image acquisition modules respectively, and is used to obtain a plurality of zero calibration trigger pulses according to the frequency division of the initial zero calibration trigger pulse, and is also used to obtain a plurality of acquisition trigger pulses according to the frequency division of the initial acquisition trigger pulse;
the image acquisition module is connected to the data synchronization module, and is used to perform zero calibration of a local clock upon receiving the zero calibration trigger pulse, and is also used to acquire image frames after receiving the acquisition trigger pulse.

11. A computer-readable storage medium having a computer program stored thereon, **characterized in that**, wherein the storage medium stores a computer program, and when the computer program is executed by a processor, the processor implements the data synchronization method according to any one of claims 1 to 7.
